# EUROPEAN PATENT APPLICATION

(11) **EP 3 818 915 A1**
(43) Date of publication of application: **12.05.2021**
(21) Application number: 19208310.3
(22) Date of filing: 11.11.2019
(51) Int. Cl.: A47J 31/60

(54) **BEVERAGE PREPARATION MACHINE AND BEVERAGE PREPARATION METHOD FOR PREPARING A BEVERAGE WITH SUCH A BEVERAGE PREPARATION MACHINE**

(71) Applicant: Société des Produits Nestlé S.A., 1800 Vevey (CH)
(72) Inventor: FLICK, Jean-Marc, 1405 POMY (CH)
(74) Representative: Navarro Fernández, Maria Isabel

(57) **Abstract**

The present invention relates to a beverage preparation machine (1) comprising:
- a liquid tank (2) defining a chamber (8), the chamber (8) having a selectively variable volume,
- a UV sanitization unit (4) for emitting UV light into the chamber (8) to sanitize the liquid in the chamber (8), and
- a beverage preparation unit (6) connected to the chamber (8) to receive the sanitized liquid for beverage preparation.

## Description

### TECHNICAL FIELD

The present invention relates to a beverage preparation machine. Further, the present invention relates to a method for preparing a beverage with a beverage preparation machine.

The present invention may be used to prepare a wide spectrum of beverages by using various product containers. A product container may enclose a nutritional composition or ingredients in a liquid, pasty or powdery form, such as an infant formula composition, milk-based ingredients, soya-based ingredients or coffee-based ingredients. With the present invention a ready-to-drink beverage may be prepared in a safe and hygienic manner.

### BACKGROUND

Some of the known beverage preparation machine comprise a liquid tank, a beverage preparation unit, a liquid pump for displacing liquid from the liquid tank to the beverage preparation unit, and a heater for warming up the displaced liquid at e.g. 25 to 45°C before it gets introduced into the beverage preparation unit. In addition, the known beverage preparation machine comprises a UV sanitization unit, which emits UV light to sanitize the liquid passing therethrough. So the liquid is sanitized in-line while passing through the UV sanitization unit and before it gets introduced into the beverage preparation unit.

The degree of sanitization depends: i) on the fluence, hence on the power of UV light emitted by the UV sanitization unit (expressed in mW/cm²), and ii) on the time of exposure, hence the time of residence of the liquid in the UV sanitization unit. The higher the fluence or the longer the time of residence is, the higher the degree of sanitization of the liquid will be.

However, the present applicant has observed that the known beverage preparation machine present the following problems and drawbacks, which might arise from their designs.

The time of residence highly depends on the liquid flow rate and on the fluidic design set for the beverage preparation machine. Thus, since the liquid might remain only for a short time period in the UV sanitization unit, ensuring a suitable degree of sanitization might necessitate a disadvantageously high power of UV light and a highly accurate liquid flowrate, which increases the production and exploitation costs of the UV sanitization unit and, of the liquid pump and of the associated control unit.

Moreover, the fluidic design of the beverage preparation machine inevitably involves some dead volumes along the liquid flow path from the liquid tank to the beverage preparation unit. However, the dead volumes risk favoring the growth of bacteria biofilm, which can contaminate the liquid, even when clean water is used, and which necessitates intense maintenance operations, usually long and frequent.

### SUMMARY

In view of the above-mentioned problems and drawbacks, the present invention aims to improve the current implementations. An objective is to ensure an enhanced sanitization of the liquid, while ensuring a simple fluidic design of the beverage preparation machine. The objective is achieved by the embodiments defined in the independent claims. Advantageous implementations are further defined in the dependent claims.

An embodiment of the invention provides a beverage preparation machine comprising:
- a liquid tank defining a chamber for receiving a liquid, wherein the chamber has a selectively variable volume,
- a UV sanitization unit configured and positioned to emit UV light into the chamber so as to sanitize the liquid received in the chamber, and
- a beverage preparation unit fluidly connected to the chamber, so as to receive the sanitized liquid for a beverage preparation (e.g., preferably upon or by a reduction of the volume of the chamber).

Thus, as the volume of the chamber is selectively variable, it may be adjusted to receive the liquid volume required to be dispensed for preparing a beverage, and the liquid may be efficiently sanitized in the chamber by the UV light. Then, the liquid may be transferred from the chamber to the beverage preparation unit, preferably upon reduction of the selectively variable volume of the chamber. Thus, the beverage preparation machine eliminates the need for a separate pump and for a duct connecting the separate pump to a UV sanitization unit. Hence, the beverage preparation machine helps decrease the number of dead volumes, as compared to the known beverage preparation machine.

As the selectively variable volume may be varied in a controlled manner, the liquid may be transferred to the beverage preparation unit with a substantially constant flowrate of e.g. 200 or 400 mL/min.

In addition, the liquid may be sanitized at a higher degree and/or in a shorter time period, which decreases the volume of water required to regularly clean the beverage preparation machine. Also, as the liquid is sanitized as a batch in the chamber and all of the liquid is then used for preparing the beverage, there is no liquid remaining in the liquid tank, thus reducing the risk of biofilm growing therein, unlike in the known beverage preparation machine.

The liquid may be static in the chamber, in particular when the UV sanitization unit emits UV light. In other words, the liquid does not flow through an inlet or an outlet of the chamber while when the UV sanitization unit emits UV light, unlike in the known beverage preparation machine where the liquid gets sanitized by UV light while flowing in-line from the upstream liquid tank to the downstream beverage preparation unit.

In some implementations, the beverage preparation unit may be configured to prepare a beverage with all of the sanitized liquid. In such implementations, the whole batch of liquid is sanitized and then used to prepare a beverage. Alternatively, the beverage preparation unit may be configured to prepare a beverage with some or most of the sanitized liquid. In particular, two or more consecutive beverages may be prepared with the liquid sanitized in the chamber in a single sanitization operation.

In some implementations, the chamber may substantially have a cylindrical shape. Thus, the UV sanitization unit may reach the liquid anywhere in the chamber, while minimizing the presence of dead volumes.

In various implementations, the liquid tank may comprise i) a housing and ii) a displaceable element, for example a piston,
the displaceable element being arranged inside the housing, preferably at a bottom part of the housing, so as to delimit the chamber,
the displaceable element being configured to be displaced relative to the housing, preferably upwards and in a vertical direction, so as to vary the volume of the chamber.

Thus, the displaceable element may accurately modify the selectively varying volume of the chamber. In particular, the displaceable element may generate accurate flowrate and pressure of the liquid to transfer it to the beverage preparation unit.

In some implementations, the displaceable element, for example the piston, may substantially have the shape of a disk or a flat cylinder.

In some implementations, the beverage preparation machine may further comprise an electrical motor and a gearbox, the gearbox being arranged to link the electrical motor to the displaceable element so as to displace the displaceable element relative to the housing.

In some variants, the electrical motor, the gearbox and the displaceable element may be dimensioned, such that the liquid may be transferred to the beverage preparation unit under a pressure of up to 8 bar.

Thus, the displaceable element may push and pressurize the liquid contained in the chamber toward the beverage preparation unit.

In various implementations, the liquid tank may comprise a cover configured for selectively closing and opening the chamber, the cover being preferably located opposite the displaceable element with respect to the chamber, preferably in an upper region of the chamber, in particular atop the chamber, when closing the chamber,
the beverage preparation machine preferably further comprising a linkage mechanism arranged to link the cover to i) a fixed body of the beverage preparation machine or ii) to the housing, the linkage mechanism being configured to guide the movements of the cover when selectively opening and closing the chamber.

Thus, the cover in the open position allows to refill the chamber with liquid, for example poured in by a user, while the cover in the closed position allows the liquid in the chamber to be pressurized and then transferred to the beverage preparation unit. The cover is preferably located opposite to the displaceable element with respect to the chamber, more preferred at an upper or top part of the housing.

In some implementations, the cover may be a lid or a cap.

Alternatively, the beverage preparation machine may not comprise a mobile cover, but instead comprise i) a separate receptacle for receiving a refilling liquid and ii) a pipe configured to transfer the refilling liquid from the receptacle to the chamber.

In some implementations, the cover may be located atop the chamber when closing the chamber.

In some implementations, the cover may bear against the housing, preferably in a liquid-tight and, preferably, gas-tight manner, when closing the chamber.

In some implementations, the liquid tank may comprises at least one seal arranged such that the cover closes the chamber in a liquid-tight manner and, preferably, in a gas-tight manner, the at least one seal being preferably located so as to be compressed between the cover and the housing.

Thus, the liquid may be pressurized in the chamber, hence pushed and transferred to the beverage preparation unit.

Thanks to the linkage mechanism, opening and closing of the chamber may be performed easily, as the linkage mechanism guides the cover between its open position and its closed position.

In some implementations, the linkage mechanism may be configured so as to completely clear the cover from an upper surface of the chamber. During the opening of the chamber, the cover may move up and away with respect to the chamber, which helps completely clearing the cover from an upper surface of the chamber. Thus, a user may easily refill the chamber with liquid, as the cover does not obstruct the upper surface of the chamber. During the closing of the chamber, the cover may move down and toward the chamber, which allows putting the cover in its closed position.

In some implementations, the linkage mechanism may be configured to guide the cover along a movement composed of a vertical translation and a pivoting movement around a vertical axis. This composed movement may for example follow a helical course. The composed movement may be guided by the cooperation of a helical groove with a pin engaging the helical groove. The pin and the helical groove may be arranged respectively on the cover and on the fixed body or vice-versa.

In some implementations, the linkage mechanism may comprise a pneumatic cylinder arranged to push the cover towards its open position. Thus, the opening of the chamber may be facilitated by the pression exerted on the cover by the pneumatic cylinder. Further, during the closing of the chamber, the pneumatic cylinder may dampen a closing force exerted on the cover e.g. manually by a user, which avoids damaging impacts and mispositioning of the cover. Alternatively or additionally to the pneumatic cylinder, the linkage mechanism may comprise an elastically deformable component arranged to bias the cover towards its open position.

In some implementations, the linkage mechanism may comprise a lock configured to lock the cover onto the fixed body in the closed position. Thus, the cover remains immobile when the displaceable element transfers the sanitized liquid toward the beverage preparation unit, for example under a liquid pressure of up to 8 bar.

In some implementations, the beverage preparation machine may comprise a piercing element, for example a hollow needle, configured to pierce a product container and to introduce sanitized liquid therein, the beverage preparation unit including a connection line arranged to fluidly connect the chamber to the piercing element. Thus, the sanitized liquid may be conveyed from the chamber to the beverage preparation unit, and then into the product container, by selectively varying the volume of the chamber.

In some implementations, the cover may be integral with the connection line and with the piercing element. Thus, as the piercing element may be integral with the cover, moving the cover for closing the chamber simultaneously moves the piercing element until it pierces the product container.

Alternatively, the movement of the cover may be dissociated from the movement of the piercing element. For example, the beverage preparation machine may further comprise an actuator configured to move the piercing element until the piercing element pierces the product container. Such an alternative arrangement offers more flexibility in the use of the machine.

In some implementations, the beverage preparation machine may further comprise a control unit configured to read a code and to set, as a function of the code, a target volume to be reached by the selectively varying volume, the code being preferably carried by a product container placed in or near the beverage preparation unit.

In various implementations, the UV sanitization unit may be included in the liquid tank, preferably integrally provided with the liquid tank, preferably in the displaceable element, and/or preferably in the housing and/or in the cover.

Thus, the arrangement of the UV sanitization unit ensures that the full volume of liquid in the chamber may be exposed to UV light. In particular, the UV sanitization unit may be arranged to functionally face the chamber.

In some implementations, the UV sanitization unit may comprise an array of UV LEDs. In some implementations, the UV sanitization unit may comprise at least two UV emitting modules, each UV emitting module comprising at least one UV LED, preferably an array of UV LEDs. In some implementations, the UV emitting modules may be included in the displaceable element and/or in the housing and/or in the cover.

In some implementations, the UV LEDs may be configured to provide a monodispersed light spectrum having a wavelength centered at 265 nm or 280 nm. The UV LEDs may be powered with a DC power source supplying about 1.2 A at 9 to 12 V. The power consumption of the UV sanitization unit may range for example between 5 and 13 W. With respect to the conventional UV mercury-based lamps, which require a preheating time of more than 15 minutes, the UV LEDs have the advantage of being immediately operational upon activation and of having a much longer shelf life.

In some implementations, the UV sanitization unit may include a heat sink and a cooling blower arranged to evacuate the heat generated by the UV LEDs. The heat sink and the cooling blower may be oriented towards the exterior of the liquid tank.

In some implementations, the UV sanitization unit may include a PCB (Printed Circuit Board) configured to control and power the UV LEDs. Preferably, the PCB may be mounted on or attached to the heat sink.

In some implementations, the liquid tank may comprise a temperature sensor configured to monitor the temperature of the liquid in the chamber. The temperature sensor may preferably be a NTC sensor.

In some implementations, the temperature sensor may preferably be arranged in the UV sanitization unit, preferably on the PCB. In case the UV sanitization unit is included in the cover, the temperature sensor may be located relatively far from the displaceable element and/or from the lateral walls of the chamber, hence from the components of the liquid tank that are heated by the heating unit.

In these implementations, after the heating unit has started warming up the chamber, it takes some time before the liquid close to the temperature sensor reaches the desired temperature of e.g. 33°C, as the heat is transferred quite slowly in the liquid, mainly by conduction. Hence, before the temperature sensor detects the desired temperature, the heating unit may first heat up, to a temperature as high as e.g. 80°C, the components of the liquid tank as well as the boundary layer of 1-2 µm of liquid, thus killing already most of the microorganisms present on these components of the liquid tank, while the UV light kills the microorganisms floating in the liquid.

In the present disclosure, the terms "warming", "warming up", "heating" and "heating up" are not limited to specific temperatures. The temperature desired for warming up the liquid depends on the beverage to be prepared. For an infant formula, the desired temperature should generally not exceed 40°C, whereas for a coffee the desired temperature may be much higher, for example 80°C or 90°C or even beyond (e.g. about 90-93°C for espresso style coffee). Likewise, the temperature required for heating up some the chamber delimiting components depends on the required degree of disinfection. The required temperature may for example be 80°C as well as 120°C, preferably higher than the evaporation temperature of the liquid, for example 100°C for water.

Thus, the heat sink offers an efficient cooling of the UV LEDs, which would otherwise risk degrading their performances as well as shifting the light spectrum, hence diminishing the sanitization efficiency.

In various implementations, the UV sanitization unit may comprise a UV sensor, the UV sensor being arranged to detect the level of the liquid in the chamber.

Thus, a control unit may evaluate the level of liquid from the output signals of the UV sensor. Then, the control unit may accurately modify the selectively varying volume of the chamber so as to ensure accurate flowrate and pressure of the liquid. In particular, the control unit may accurately control the displacement of the displaceable element.

The UV sensor may be configured to send signals representative of a physical quantity of UV light received by the UV sensor. The UV light received by the UV sensor may be UV light that is reflected in the chamber. The level of liquid mav be detected bv measuring the intensity of UV light reflected in the chamber, including the UV light reflected by an upper surface of the liquid.

Besides, the UV sensor may monitor the activity of the UV LEDs and a level of emitted UV light, for example by measuring the UV light that is reflected in the chamber when the US sensor is arranged next to the UV LEDs but not facing the UV LEDs. Thus, the UV sensor may deliver information on the correct operation of the UV LEDs and on the UV LEDs fluence. Thus, the UV sensor makes it possible to accurately evaluate the performance of the UV LEDs, while merely measuring the power consumption in the UV LEDs would not.

In some implementations, the UV sanitization unit may comprise a protective window, which is arranged to fluidly separate the chamber from the UV LEDs and which is configured to let the emitted UV light pass through. Thus, the protective window may protect the UV LEDs from the liquid while letting the UV light pass through to sanitize the liquid in the chamber. In some implementations, the protective window may be made of quartz. Preferably, the protective window may be arranged flush with a bottom wall of the cover. Thus, no dead volume is formed around the protective window, which avoids the growth of microorganisms.

In various implementations, the beverage preparation machine may further comprise a connection section, the connection section preferably comprising a piercing element and/or a connection line, for fluidly connecting and disconnecting the chamber to and from the beverage preparation unit, wherein the connection section or at least its connection line may preferably be integrally provided with the cover for selectively fluidly connecting and disconnecting the chamber to and from the beverage preparation unit.

Thus, the connection section may achieve the transfer of liquid from the chamber to the product container in order to prepare a beverage.

In some implementations, the piercing element may be a hollow needle.

In various implementations, the beverage preparation machine may further comprise: i) a first non-return valve configured to let air flow in, but not out of, the chamber, the first non-return valve being preferably arranged in the cover, and/or ii) a second non-return valve configured to let fluid flow out of, but not into, the chamber, the second non-return valve being preferably arranged in the beverage preparation unit or in the connection section.

Thus, after the beverage preparation, the first non-return valve allows to suck air in the chamber and then push it through the beverage preparation unit in order to drain the liquid tank. Thus, the second non-return valve allows liquid or air to pass outwards, but not inwards, which helps preventing bacteria ingress.

In various implementations, the beverage preparation machine may further comprise a heating unit configured to transfer heat to the chamber, in particular for warming up the liquid, the heating unit being preferably arranged to transfer heat to at least one wall delimiting the chamber, preferably to a lateral wall extending between the bottom of the chamber and the top of the chamber,
the heating unit being preferably configured to also transfer heat to at least part of the connection section or the connection line (preferably being a/the part of the connection section).

Thus, the liquid may directly be warmed-up in the chamber, in addition to being sanitized therein and transferred therefrom. Thus, the beverage preparation machine eliminates the need for a separate heating unit and for a duct connecting the separate heating unit to a UV sanitization unit, hence also the number of dead volumes, as compared to the known beverage preparation machine.

In addition, the liquid may be sanitized and warmed-up at the same time in the chamber, which saves time and/or increases the time of exposure of the liquid to UV light, hence the degree of sanitization, as compared to the known beverage preparation machine. The expression "at the same time" means that at least a part of the sanitization and a part of the warming-up may occur in a common period of time, even though the respective starting times and the respective ending times of the sanitization and of the warming-up do not exactly coincide. For example, the sanitization may start before the warming-up or vice-versa, and the sanitization may end after the warming-up or vice-versa.

Further, the heating unit may disinfect the chamber under a high temperature of e.g. 100°C, preferably by heating up the housing and/or the displaceable element and/or the cover.

In some implementations, the heating unit may include: i) a rolled film having a printed heating circuit, which may be arranged around the chamber, preferably around the housing, and/or ii) a flat film having a printed heating circuit, which may be arranged on or in the displaceable element, for example on a face of the displaceable element lying opposite the chamber.

In some implementations, the heating unit may include a heating cartridge extending along and/or around, which may be arranged around a part of the beverage preparation unit, preferably around a connection line representing the last fluidic portion of the beverage preparation machine before the beverage is dispensed in a pot or cup.

An electrical circuit may be arranged to supply power to the heating unit. The rolled film, the flat film, and the heating cartridge may consume, by resistive heating, respectively about 800 W, 400 W, and 200 W, which power is available in a home environment.

A further implementation provides a method for preparing a beverage with a beverage preparation machine as afore-described, the method comprising:
- selectively varying the volume of the chamber so as to reach a target volume,
- filling the chamber with a liquid,
- emitting UV light, by the UV sanitization unit, into the chamber so as to sanitize the liquid received in the chamber,
- transferring some or all of the sanitized liquid to a beverage preparation unit (e.g., preferably upon or by reduction of the volume of the chamber; and more preferred to allow for a desired flow rate), and
- preparing a beverage with the transferred liquid.

Thus, as the volume of the chamber is selectively variable, it may be adjusted to receive the liquid volume required to be dispensed for preparing a beverage, and the liquid may be efficiently sanitized in the chamber by the UV light. Then, the liquid may be transferred from the chamber to the beverage preparation unit, preferably upon reduction of the selectively variable volume of the chamber. Thus, the method eliminates the need for separately pumping the liquid and conveying it in a duct connecting the separate pump to a UV sanitization unit. In addition, the liquid may be sanitized at a higher degree and/or in a shorter time period. Also, the sanitized liquid might be transferred at a desired flow rate preferably if transferred upon a defined reduction of the chamber volume.

As the volume may be selectively varied in a controlled manner, the liquid may be transferred to the beverage preparation unit with a substantially constant flowrate of e.g. 200 or 400 mL/min.

Further, the method may comprise: dispensing the prepared beverage, for example in a pot or cup.

In various implementations, the target volume may be set to be the sum of i) a volume to be dispensed to prepare the beverage and ii) a safety volume, preferably smaller than 10 mL, more preferably of about 5 to 6 mL.

Thus, the safety volume allows the user to feed the chamber with the liquid up to a visual mark made in the chamber without risking an overflow. As the volume of the chamber is selectively variable, the visual mark may have a constant position in the chamber.

In various implementations, the method may further comprise: after filling the chamber with the liquid, selectively decreasing the volume of the chamber so as to evacuate some or all gas out of the chamber, preferably via the beverage preparation unit and/or via the second non-return valve.

Thus, as the volume of the chamber may be selectively decreased until most or all of the gas or air has been evacuated out of the chamber, the heating or warming efficiency for heating the liquid in the chamber may be increased, as no gas will insulate the liquid from the liquid tank. Further, it is ensured that the liquid may be put in contact with the UV sanitization unit, thus maximizing the dose of UV light emitted in the liquid, hence the degree of sanitization.

In some implementations, the cover may be equipped with a first non-return valve, which is configured to let air enter the chamber from outside (e,g, upon or by increase of the volume of the chamber), but prevents air and liquid from flowing out of the chamber through the cover. After a beverage preparation, the displaceable element may be moved back, herein downwards, and the first non-return valve may let air enter the chamber. The entered air may then be pushed through the beverage preparation unit in order to completely empty the product container.

In some implementations, the beverage preparation machine may include a second non-return valve, which may be arranged between the connection line and the piercing element. When the displaceable element is moved back after a beverage preparation, for example from a top position in the chamber, the second non return valve may let air enter the downstream end duct up to the chamber.

In various implementations, the method may further comprise: at least partially during the emission of UV light, successively decreasing and increasing the volume of the chamber in an oscillating manner so as to set the liquid in motion within the chamber.

Thus, setting the liquid in motion by making the volume of the chamber oscillate generates liquid streams that displace and mix the liquid in the chamber. As a result, most or all of the liquid may be sufficiently exposed to UV light, thus enhancing the degree of sanitization.

In various implementations where the beverage preparation machine comprises the heating unit, the beverage preparation machine may comprise the heating unit as afore-described, the method may further comprise:
- after filling the chamber with the liquid, warming up by the heating unit the liquid in the chamber, and
- preferably, performing the emission of UV light at least partially during the warming-up of the liquid.

In other words, the liquid may be sanitized as a batch in the chamber during a longer period of time than in the known beverage preparation machine. Since the liquid may be sanitized during a long period of time, that is the time required for warming up the liquid, for example 60 s, the liquid in the chamber may be exposed to an enhanced dose of UV light, for example of 3000 mJ/cm2 with a predetermined fluence of the UV LEDs, for example of 50 mW.

In some implementations, the heating unit may be configured to warm up the housing, the displaceable element, and the connection line (last fluidic portion) at the desired temperature.

In the present disclosure, the terms "uppermost", "top", "bottom", "lowermost", "upper", "lower", "above" and the like refer to the service configuration of the beverage preparation machine, hence when the liquid flows therethrough in order to prepare a beverage. In the present disclosure, the terms "upstream" and "downstream" refer to the direction of flow of a liquid during the preparation of a beverage. For example, the liquid tank is located upstream the beverage preparation unit.

In various implementations, the method may further comprise:
- after transferring the sanitized liquid to the beverage preparation unit, letting air enter the chamber (e.g. upon or by increase of the volume of the chamber), preferably via the first non-return valve,
- heating up, by the heating unit, the liquid tank and/or the entered air and, preferably, the connection line (so as to evaporate any remaining liquid residues), and
- reducing the selectively variable volume of the chamber so as to evacuate the entered air (hence carry any evaporated liquid residues), preferably via the beverage preparation unit and further preferred also via the connection section and/or the second non-return valve, to an outside,
wherein, preferably after the heating up operation, at least part of so heated up components of the beverage preparation machine are actively cooled.

Thus, the active cooling of some or all of the heated components (e.g. the liquid tank or its housing and/or cover and/or displaceable element (e.g. piston), and/or the connection section or its connection line) enables to more quickly perform the next beverage preparation.

In various implementations, the method may further comprise: reading a code and setting the target volume as a function of the code, the code being preferably carried by a product container placed in or near the beverage preparation unit.

Thus, the target volume may be adjusted to match a volume encoded in the code, thus enhancing the tastiness of the prepared beverage and minimizing the power consumption needed for achieving the UV sanitization.

It has to be noted that all devices, elements, components, members, units and means described in the present application could be implemented in any technically applicable combination of the implementation forms. All steps which are performed by the various entities described in the present application as well as the functionalities described to be performed by the various entities are intended to mean that the respective entity is adapted to or configured to perform the respective steps and functionalities. Even if, in the following description of specific embodiments, a specific functionality or step to be performed by external entities is not reflected in the description of a specific detailed element of that entity which performs that specific step or functionality, it should be clear for a skilled person that these methods and functionalities can be implemented in any technically applicable combination of the implementation forms.

### BRIEF DESCRIPTION OF DRAWINGS

The above described aspects and implementation forms of the present invention will be explained in the following description of specific embodiments and aspects in relation to the enclosed drawings, in which:
- FIG. 1: is a schematic perspective view illustrating a part of a beverage preparation machine according to a first embodiment of the present invention;
- FIG. 2: is a schematic perspective view illustrating a beverage preparation machine according to a second embodiment of the present invention;
- FIG. 3: is a schematic perspective view, cut along plane III in FIG. 2, illustrating a part of the beverage preparation machine of FIG. 2, wherein the chamber has a large volume;
- FIG. 4: is a view similar to FIG. 3, wherein the chamber has a small or null volume;
- FIG. 5: is a schematic perspective view illustrating a component of the beverage preparation machine of FIG. 2;
- FIG. 6: is a schematic perspective view, cut along plane VI in FIG. 5;
- FIG. 7: is a schematic perspective view illustrating the component of FIG. 5 under an angle different from FIG. 5;
- FIG. 8: is a schematic perspective view illustrating a subcomponent of the component of FIG. 7;
- FIG. 9: is a schematic perspective view illustrating another subcomponent of the component of FIG. 7;
- FIGs. 10.1 to 10.10: are schematic views illustrating different operations in a method according to an implementation;
- FIG. 11: is a flowchart illustrating a process for starting a beverage preparation machine according to an embodiment of the present invention;
- FIG. 12: is a flowchart illustrating a process for initializing an electrical motor of a beverage preparation machine according to an embodiment of the present invention;
- FIG. 13: is a flowchart illustrating a first method for preparing a beverage with a beverage preparation machine according to an embodiment of the present invention;
- FIG. 14: is a flowchart illustrating a second method for preparing a beverage with a beverage preparation machine according to an embodiment of the present invention;
- FIG. 15: is a flowchart illustrating a process for reading a code, which process may be performed in the method of FIG. 13 or 14;
- FIG. 16: is a flowchart illustrating a process for detecting the level of liquid, which process may be performed in the method of FIG. 13 or 14;
- FIG. 17: is a flowchart illustrating a process for oscillating the selectively varying volume of the chamber, which process may be performed in the method of FIG. 13 or 14;
- FIG. 18: is a flowchart illustrating a transferring process, which transferring process may be performed in the method of FIG. 13 or 14, in order to transfer liquid to the beverage preparation unit;
- FIG. 19: is a flowchart illustrating a drainage process, which drainage process may be performed in the method of FIG. 13 or 14, in order to drain remaining liquid out of the chamber;
- FIG. 20: is a flowchart illustrating a drying process, which drying process may be performed in the method of FIG. 13 or 14, in order to drain remaining liquid out of the chamber; and
- FIG. 21: is a diagram illustrating the evolution, as a function of time, of: i) a position of a displaceable element in a chamber of the beverage preparation machine of FIG. 2 and ii) the current intensity supplied to a UV sanitization unit of the beverage preparation machine of FIG. 2.

### DETAILED DESCRIPTION

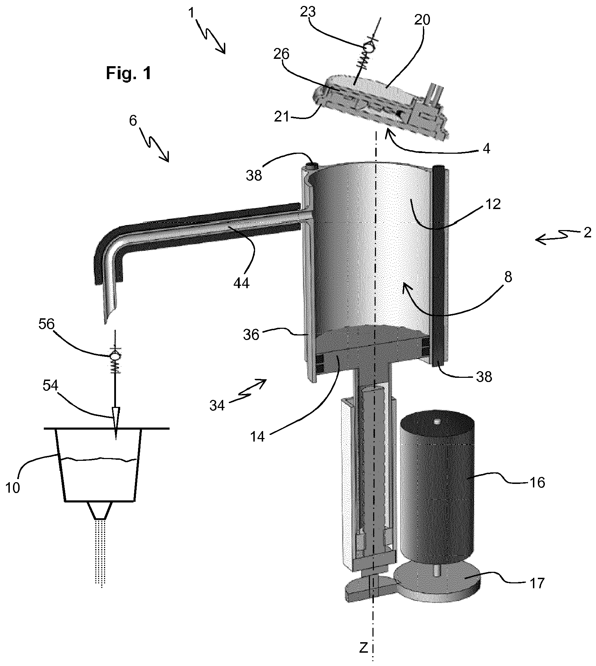

FIG. 1 illustrates a beverage preparation machine 1 comprising: a liquid tank 2, a UV sanitization unit 4 and a beverage preparation unit 6. The liquid tank 2 defines a chamber 8 for receiving a liquid, for example water. The chamber 8 has a selectively variable volume, as hereafter-described. The UV sanitization unit 4 is configured and positioned to emit UV light into the chamber 8 so as to sanitize the liquid received in the chamber 8. The beverage preparation unit 6 is fluidly connected to the chamber, so as to receive the sanitized liquid for a beverage preparation using a product container 10, for example upon reduction of the selectively variable volume of the chamber 8.

The liquid tank 2 may comprise i) a housing 12 and ii) a displaceable element 14. The housing 12 may be formed by a cylindrical wall, which surrounds the chamber 8. The displaceable element 14 may be arranged inside the housing 12, in particular at a bottom part of the housing 12 in the example of FIG. 1, so as to delimit the chamber 8. The displaceable element being 14 may be configured to be displaced relative to the housing 12, preferably upwards and in a vertical direction Z, so as to vary the volume of the chamber 8.

In the example of FIG. 1, the displaceable element being 14 may include a piston. The piston may substantially have the shape of a disk or a flat cylinder, which may have a diameter ranging **from 10 to 100 mm,** while the chamber 8 may have a height ranging **from 10 to 100 mm.**

When it is displaced, the displaceable element 14 may accurately modify, in particular reduce, the selectively variable volume of the chamber 8. In particular, the displaceable element 14 may generate accurate flowrate and pressure of the liquid to transfer it to the beverage preparation unit 6. In order to prepare a beverage, the displaceable element 14 may push and pressurize the liquid contained in the chamber 8 toward the beverage preparation unit 6.

The beverage preparation machine 1 may further comprise an electrical motor 16, a gearbox 17, a transmission belt 18 and a linear actuator, which may herein comprise a ball screw 19.1 with a ball nut 19.2. The gearbox 17 may be arranged to link the electrical motor 16 to the displaceable element 14, via the transmission belt 18, so as to displace the displaceable element 14 relative to the housing 12. The electrical motor 16, the gearbox 17 and the displaceable element 14 may be dimensioned, such that the liquid may be transferred to the beverage preparation unit 6 under a pressure of up to 8 bar. The electrical motor 16 may be fitted with cables 16.1 and 16.2 for receiving power supply and control signals.

The liquid tank 2 may comprise a cover 20, which is configured for selectively closing and opening the chamber 8. When the cover 20 is in the closed position, hence closing the chamber 8, the cover 20 may be located atop the chamber 8. For example, the cover 20 may be in firm, sealing contact on a ring 9 located atop the chamber 8. The cover 20 may herein be located opposite the displaceable element 14 with respect to the chamber 8.

When placed in the open position, the cover 20 allows to refill the chamber 8 with liquid. For example, a user may pour liquid in the chamber 8. When the cover 20 is placed in the closed position, the cover 20 allows the liquid in the chamber 8 to be pressurized and then transferred to the beverage preparation unit 6.

The cover 20 may bear against the housing 12 in a liquid-tight and gas-tight manner, when closing the chamber 8. The liquid tank 2 may comprise a seal 21, which may be arranged such that the cover 20 closes the chamber 8 in a liquid-tight and gas-tight manner. The seal 21 may be located so as to be compressed between the cover 20 and the housing 12, for example in an annular groove 22. When the chamber 8 is closed in a liquid-tight and gas-tight manner, the liquid may be pressurized in the chamber 8, hence pushed and transferred to the beverage preparation unit 6.

Before the beverage gets prepared, the displaceable element 14 may be displaced to decrease the volume of the chamber 8 so as to evacuate the gas or air present in the chamber 8 via the beverage preparation unit 6. As the volume of the chamber 8 may be selectively decreased until most or all of the gas or air has been evacuated out of the chamber 8, it is ensured that the liquid may be put in contact with the UV sanitization unit 4, thus maximizing the dose of UV light emitted in the liquid, hence the degree of sanitization.

The beverage preparation machine 1 may further comprise a first non-return valve 23, which configured to let air flow in, but not out of, the chamber 8. The first non-return valve 23 may thus let air enter the chamber 8 from outside, but prevents air and liquid from flowing out of the chamber through the cover 20. After a beverage preparation, the displaceable element 14 may be moved back, herein downwards, and the first non-return valve 23 may let air enter the chamber 8.

After a beverage preparation, the displaceable element 14 may be moved back, herein downwards, and the first non-return valve 23 may let air enter the chamber 8. The entered air may then be pushed through the beverage preparation unit 6 in order to completely empty the product container 10. During this emptying phase, the displaceable element 14 may be moved at about the same velocity as during the beverage preparation.

The UV sanitization unit 4 may be included in the liquid tank 2. In the example of FIG. 1, the UV sanitization unit 4 may be included in the cover 20. The UV sanitization unit may be arranged to functionally face the chamber 8. The arrangement of the UV sanitization unit 4 ensures that the full volume of liquid in the chamber 8 may be exposed to UV light.

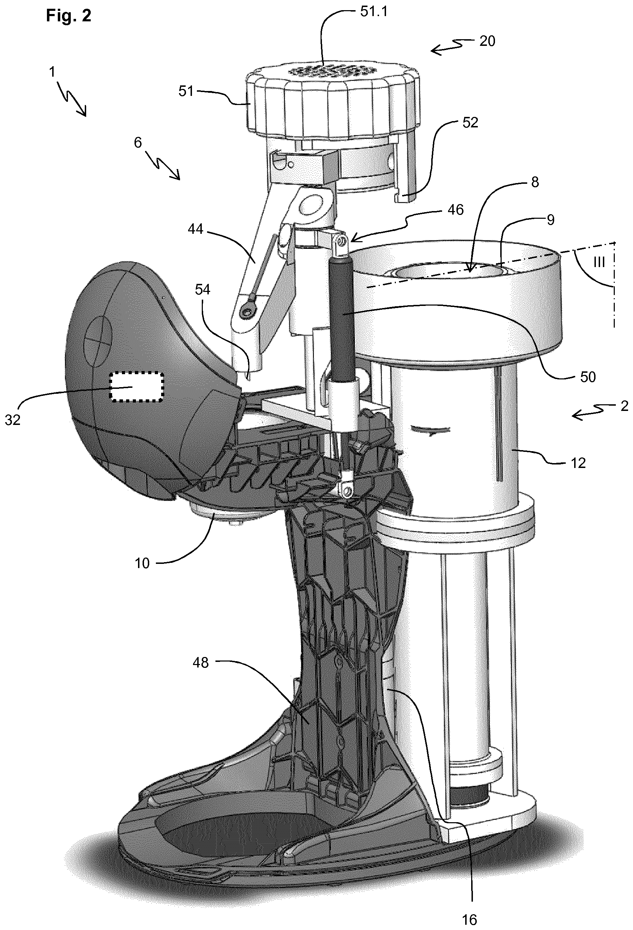

The UV sanitization unit 4 may comprise an array of four UV LEDs, as visible in FIG. 2. The UV LEDs may be configured to provide a monodispersed light spectrum having a wavelength centered at 280 nm. The UV LEDs may be powered with a not-shown DC power source supplying about 1.2 A at 9 V.

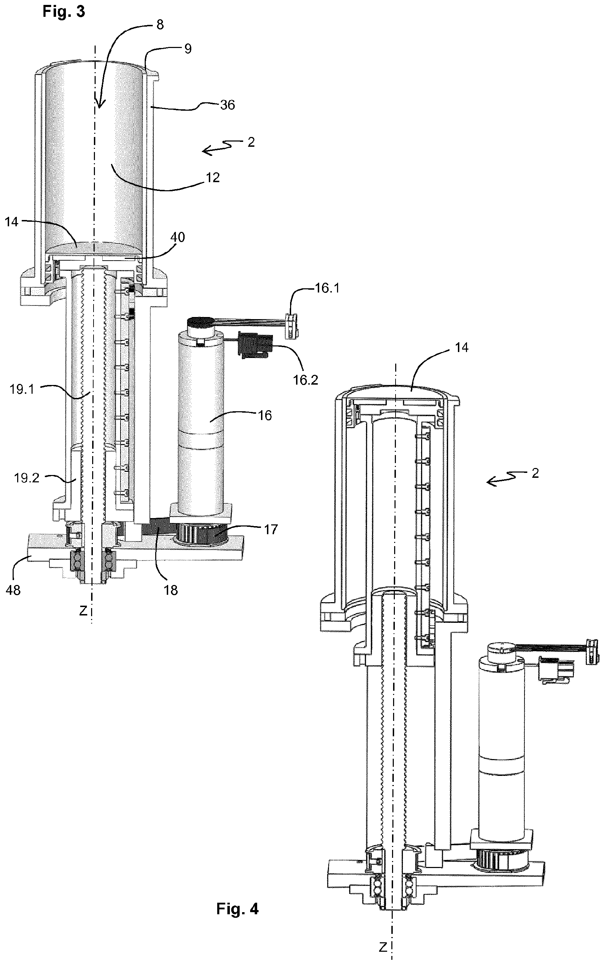

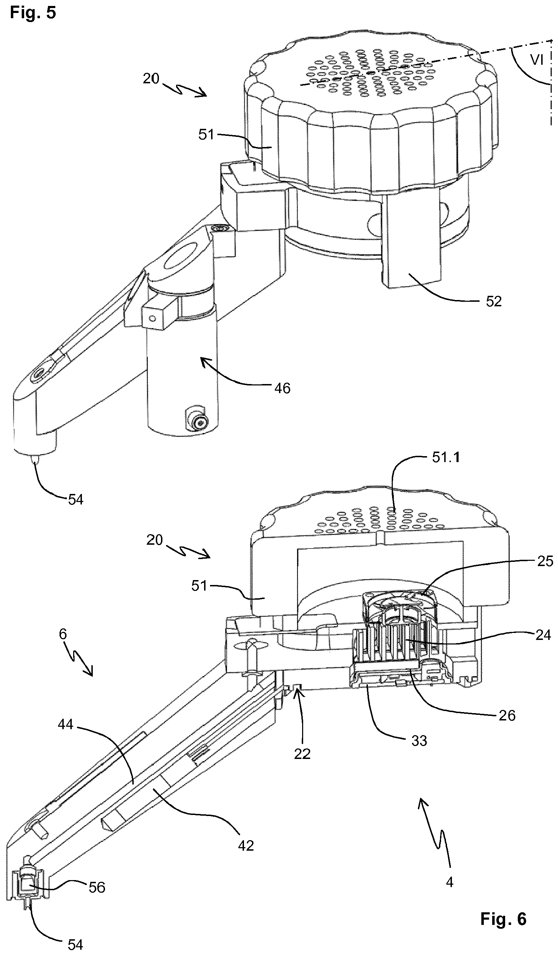

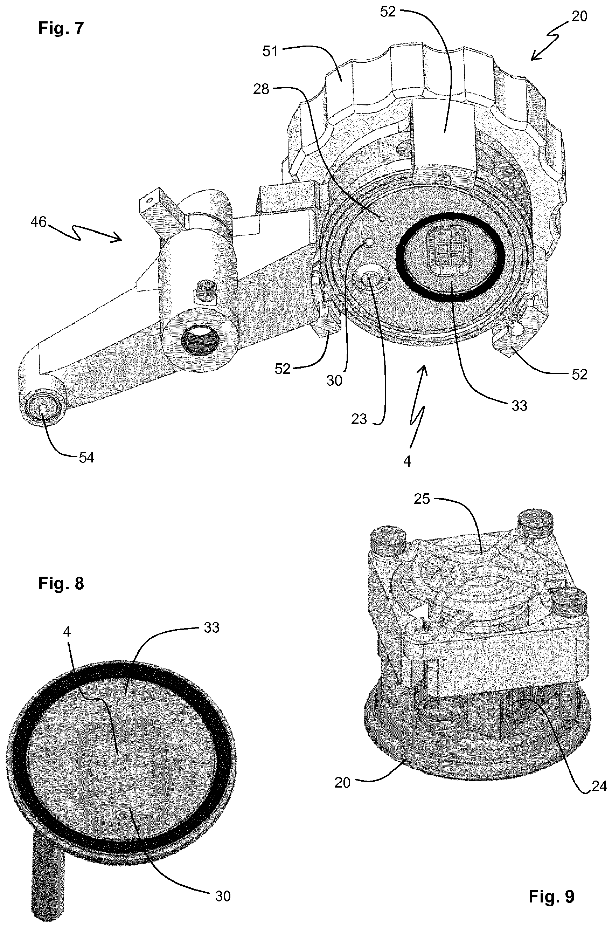

FIGs. 2 to 9 illustrate a beverage preparation machine 1 according to a second embodiment. Inasmuch as the beverage preparation machine 1 of FIGs. 2 to 9 is similar to the beverage preparation machine 1 of FIG. 1, the afore-detailed description may be applied to the beverage preparation machine 1 of FIGs. 2 to 9, except for the hereafter-mentioned noticeable differences. An element of the beverage preparation machine 1 of FIGs. 2 and 9 having a structure or function identical or similar to an element of the beverage preparation machine 1 of FIG. 1 is given the same reference sign.

The beverage preparation machine 1 of FIGs. 2 to 9 is similar to the beverage preparation machine 1 of FIG. 1, in particular in that beverage preparation machine 1 of FIGs. 2 to 9 comprises: a liquid tank 2, a UV sanitization unit 4, a beverage preparation unit 6, a chamber 8, a housing 12, a displaceable element 14, an electrical motor 16 and a gearbox 17, and a cover 20.

Further, in both beverage preparation machines 1 of FIG. 1 (although not shown) and of FIGs. 2 to 9, the UV sanitization unit 4 may include a heat sink 24 and a cooling blower 25. The heat sink 24 and the cooling blower 25 may be arranged to evacuate the heat generated by the UV LEDs. The heat sink 24 and the cooling blower 25 may be oriented towards the exterior of the liquid tank 2.

The UV sanitization unit 4 may include a PCB 26, which is configured to control and power the UV LEDs. The PCB 26 may be mounted on the heat sink 24. The UV sanitization unit 4 may include a temperature sensor 28, preferably a NTC sensor, which is configured to monitor the temperature on the PCB 26, hence indirectly the temperature of the liquid in the chamber 8.

As illustrated in FIGs. 2 to 9, the UV sanitization unit 4 may comprise a UV sensor 30, which may be arranged to detect the level of the liquid in the chamber 8. The UV sensor 30 may be configured to send signals representative of a physical quantity of UV light received by the UV sensor 30. The UV light received by the UV sensor 30 may be UV light that is reflected in the chamber 8. The level of liquid may be detected by measuring the intensity of UV light reflected in the chamber 8, including the UV light reflected by an upper surface of the liquid.

Thus, a control unit 32 may evaluate the level of liquid from the output signals of the UV sensor 30. Then, the control unit 32 may accurately modify the selectively variable volume of the chamber 8 so as to ensure accurate flowrate and pressure of the liquid. In particular, the control unit 32 may accurately control the displacement of the displaceable element 14.

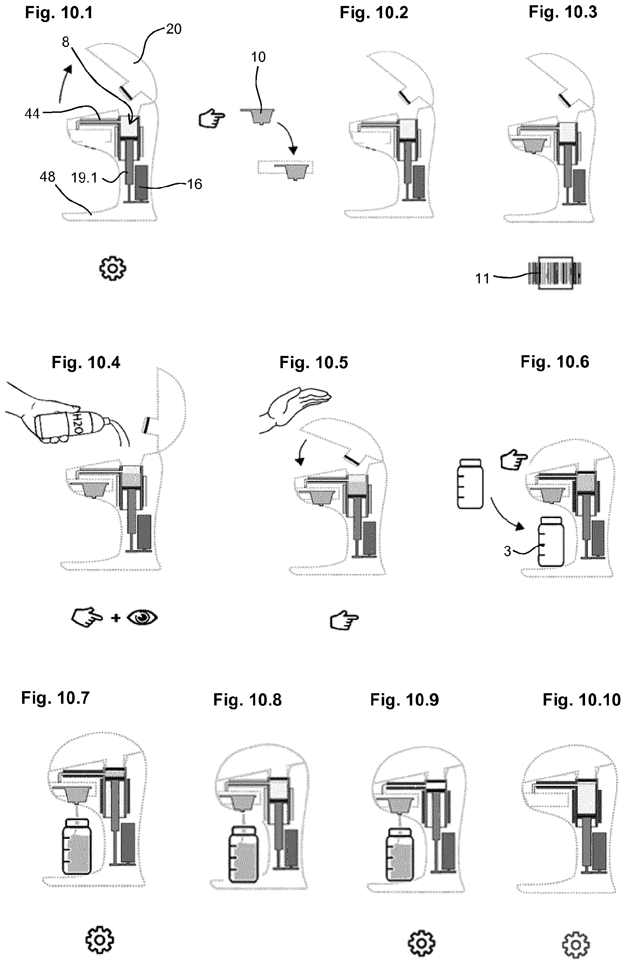

The control unit 32 may further be configured to read a code, for example carried by the product container 10 of FIG. 1 and to set, as a function of the code, a target volume to be reached by the selectively variable volume. As symbolized in FIG. 10.3, the code may be a barcode carried by the product container placed in the beverage preparation unit 6.

Besides, the UV sensor 30 may monitor the activity of the UV LEDs and a level of emitted UV light, for example by measuring the UV light that is reflected in the chamber 8 when the US sensor 30 is arranged next to the UV LEDs but not facing the UV LEDs. Thus, the UV sensor 30 may deliver information on the correct operation of the UV LEDs and on the UV LEDs fluence.

The UV sanitization unit 4 may comprise a protective window 33, which is arranged to fluidly separate the chamber 8 from the UV LEDs and which is configured to let the emitted UV light pass through it. Thus, the protective window 33 may protect the UV LEDs from the liquid while letting the UV light pass through it to sanitize the liquid in the chamber 8. The protective window 33 may be arranged flush with a bottom wall of the cover 20. Thus, no dead volume is formed around the protective window.

As illustrated in FIG. 1, the liquid tank 2 may comprise a heating unit 34, which is configured to warm up the liquid in the chamber 8. The heating unit 34 may be arranged to transfer heat to the lateral cylindrical wall that surrounds and delimits the chamber 8, which lateral cylindrical wall extends between the bottom of the chamber 8 and the top of the chamber 8.

When the heating unit 34 is controlled by the control unit 32, the liquid may be warmed-up in the chamber 8, at least partly while being sanitized therein by the UV sanitization unit 4. Then, the sanitized liquid may be transferred, by the displaceable element 14, to the beverage preparation unit 6. Thus, the liquid may be sanitized and warmed-up at least partly at the same time in the chamber 8.

The heating unit 34 may include a rolled film 36 having a printed heating circuit and elongated heating cartridges 38, which may be arranged in thermal contact with the rolled film 36. The rolled film 36 may be arranged around the housing 12, hence around the chamber 8. Further, the heating unit 34 may include a flat film 40 having a printed heating circuit. The flat film 40 may be arranged on the displaceable element 14, in particular on a face of the displaceable element 14 lying opposite the chamber 8.

The heating unit 34 may include a heating cartridge 42, which may extend along and/or around a connection line 44 representing the last fluidic portion of the beverage preparation machine 1 before the beverage is dispensed in a pot or cup. The connection line 44 here is part of a connection section and configured for fluidly connecting and disconnecting the chamber 8 with and from the beverage preparation unit 6. Thus, the heating unit 34 may be configured to warm up altogether the housing 12, the displaceable element 14, and the connection line 44 at the desired temperature, for example between 25 and 45°C.

The beverage preparation machine 1 may comprise a linkage mechanism 46, which may be arranged to link the cover 20 to a fixed body 48 of the beverage preparation machine 1. The linkage mechanism 46 may be configured to guide the movements of the cover 20 when selectively opening and closing the chamber 8.

The linkage mechanism 46 may be configured so as to completely clear the cover 20 from an upper, circular surface of the chamber 8. During the opening of the chamber 8, the cover 20 may move up and away with respect to the chamber 8, which helps completely clearing the cover 20 from the upper surface of the chamber 8, as illustrated in FIG. 2.

Thus, a user may easily refill the chamber with liquid, as the cover 20 does not obstruct the upper surface of the chamber 8. During the closing of the chamber 8, the cover 20 may move down and toward the chamber 8, which allows putting the cover 20 in its closed position.

The linkage mechanism 46 may be configured to guide the cover 20 along a movement composed of a vertical translation, along the vertical direction Z, and a pivoting movement around a vertical axis parallel to the vertical direction Z. This composed movement may for example follow a helical course and be guided by the cooperation of a not shown helical groove with a not shown pin engaging the helical groove.

The linkage mechanism 46 may comprise a pneumatic cylinder 50, which may be arranged to push the cover 20 towards its open position (FIG. 2). Thus, the opening of the chamber 8 may be facilitated by the pression exerted upwards on the cover 20 by the pneumatic cylinder 50. Further, during the closing of the chamber 8, the pneumatic cylinder 50 may dampen a closing force exerted on the cover 20 e.g. manually by a user.

The linkage mechanism 46 may also comprise a knob 51 and a lock 52. The knob 51 may be configured to enable the user to manipulate the cover 20. The knob 51 may include a grid 51.1, which may be arranged above the cooling blower 25, in order to enhance the heat dissipation.

The lock 52 may be configured to lock the cover 20 on the liquid tank 2 in the closed position. The lock 52 may comprise two or three locking legs. The knob 51 may be linked to the lock 52 and pivotally arranged on the cover 20, such that the user may turn the knob 51 to place the lock 52 in the locking position, engaging for example a bottom edge of the cover 20.

When the lock 52 is in the lock position, the cover 20 remains immobile when the displaceable element 14 transfers the sanitized liquid toward the beverage preparation unit 1, for example under a liquid pressure of up to 8 bar.

The beverage preparation machine 1 may further comprise a piercing element 54 preferably as (another) part of the mentioned connection section, which may be configured to pierce a product container (akin to 10 in FIG. 1) and to introduce sanitized liquid therein. The connection line 44 may be arranged to fluidly connect the chamber 8 to the piercing element 54. Thus, the sanitized liquid may be conveyed from the chamber 8 to the beverage preparation unit 6, and then into the product container (akin to 10 in FIG. 1), by selectively varying the volume of the chamber 8 and pushing the sanitized liquid upwards.

The beverage preparation machine 1 may include a second non-return valve 56, which is configured to let fluid flow out of, but not into, the chamber 8. The second non-return valve 56 may be arranged in the beverage preparation unit 6 or in the connection section, for example between the connection line 44 and the piercing element 54. When the displaceable element 14 is moved back after a beverage preparation, for example from a top position in the chamber 8, the second non-return valve 56 lets air enter the connection line 44 up to the chamber 8.

The beverage preparation machines 1 of FIG. 1 and of FIGs. 2 to 9 mainly differ by the shapes of some components, like the connection line 44. Apart from such structural differences, the main functional difference between the beverage preparation machines 1 of FIG. 1 and of FIGs. 2 to 9 is that, in the beverage preparation machine 1 of FIGs. 2 to 9, the cover 20 may be integral with the connection line 44 and with the piercing element 54, whereas, in the beverage preparation machine 1 of FIG. 1 like in FIGs. 10.1 to 10.10, the cover 20 may be dissociated from the connection line 44 and from the piercing element 54.

FIGs. 10.1 to 10.10 illustrate different operations in a method according to an embodiment for preparing a beverage with the beverage preparation machine 1. The method according to this embodiment may comprise:
- FIG. 10.1: Starting the beverage preparation machine 1 (power ON).
- FIG. 10.1: Initializing the beverage preparation machine 1, for example by the control unit 32.
- FIG. 10.1: Manually or automatically opening the cover 20.
- FIG. 10.2: Manually inserting a product container 10, for example a capsule containing an infant formula composition.
- FIG. 10.3: Reading a barcode 11 carried by the product container 10.
   Thus, the target volume, to be filled with liquid, may be adjusted to match the volume encoded in the code 11, thus enhancing the tastiness of the prepared beverage and minimizing the power consumption needed for achieving the UV sanitization.
- FIG. 10.3: Selectively varying the volume of the chamber 8 so as to reach a target volume, which may be set to be the sum of i) the volume to be dispensed (e.g. 250 mL) and ii) a safety volume (e.g. 6 mL).
   The selective variation of the volume may be operated by accurately displacing, by the control unit 3, the displaceable element 14 relative to the housing 12.
- FIG. 10.4: Filling the chamber 8 with a liquid (e.g. water); this operation may be performed by the user. A visual mark in the chamber may represent the appropriate filling volume. The user may fill the chamber 8 with liquid until he visually determines that the level of liquid has reached the visual mark.
- FIG. 10.5: Manually or automatically closing the cover 20.
- FIG. 10.6: Placing the pot or cup 3 (e.g. baby bottle) under the beverage preparation unit 6.

Pressing a button to start the beverage preparation.

Warming up the liquid in the chamber 8 by the heating unit 34 up to the desired the temperature.

Emitting UV light, by the UV sanitization unit 4, into the chamber 8 so as to sanitize the liquid received in the chamber 8.
- FIG. 10.7: Performing the beverage preparation process, which may include:
   i) piercing the product container 10 by the piercing element 54; ii) transferring the sanitized liquid, by the displaceable element 14, to the beverage preparation unit 6;
   iii) mixing, infusing or brewing the transferred liquid within the product container 10. And iv) dispensing the prepared beverage in the baby bottle.
- FIG. 10.8: Moving back (downwards; increasing the chamber volume) the displaceable element 14, which pumps air in the chamber 8 through the first non-return valve 23.
   As visible when comparing FIGs. 10.6 and 10.8, the beverage preparation unit 6 may be configured to prepare the beverage with all of the sanitized liquid.
- FIG. 10.9: Moving forward (upwards; decreasing the chamber volume) the displaceable element 14, so as to compress and push the entered air may through the beverage preparation unit 6 in order to completely empty the product container 10. The beverage preparation is completed and the beverage is ready.
- FIG. 10.10: Heating up and drying, by the heating unit 34, the housing 12 and/or the displaceable element 14, so as to remove all of the liquid from the chamber 8, thus preventing growth of bacteria biofilm.

Apart from some optional operations illustrated in the FIGs. 10.1 to 10.10, the method for preparing the beverage comprises:
- selectively varying a volume of the chamber 8 so as to reach a target volume;
- filling the chamber 8 with a liquid, for example with water,
- emitting UV light, by the UV sanitization unit 4, into the chamber 8 so as to sanitize the liquid received in the chamber 8,
- transferring some or all of the sanitized liquid to a beverage preparation unit 6, and
- preparing a beverage with the transferred liquid.

Thus, when the method according to an embodiment is performed, a batch of liquid may be sanitized in the chamber 8, at least partly when being warmed up, and then transferred to the beverage preparation unit 6 upon reduction of the selectively variable volume of the chamber 8, since the chamber 8 has a selectively variable volume into which the UV light is emitted.

As illustrated in FIG. 10.6, the method according to an embodiment may further comprise:
- after filling the chamber 8 with liquid, warming up, by the heating unit 34, the liquid in the chamber 8, and
- performing the emission of UV light, by the UV sanitization unit 4, at least partly during the warming-up of the liquid.

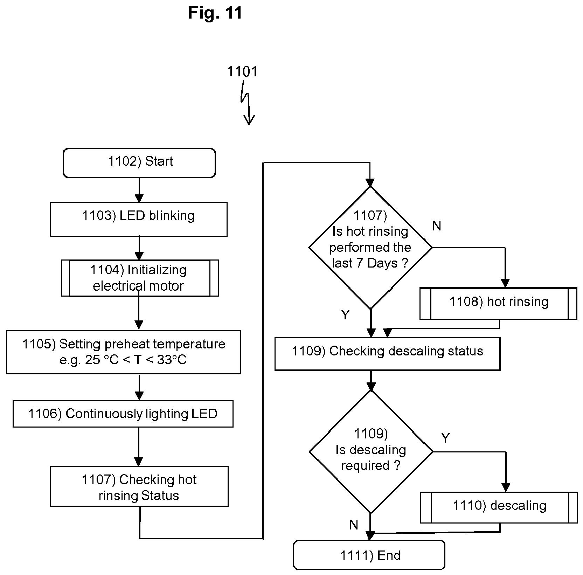

FIG. 11 illustrates a process 1101 for starting the beverage preparation machine 1. The process of FIG. 11 may comprise:
- 1102) Starting the process 1101.
- 1103) Making a LED blink, for example a LED coupled to a start button.
- 1104) Operating a process for initializing the electrical motor 16.
- 1105) Setting a preheat temperature of the beverage preparation machine 1, for example between 25 and 33°C.
- 1106) Continuously lighting the LED, for example the LED coupled to the start button.
- 1107) Checking whether the beverage preparation machine 1 has been hot rinsed recently, e.g. within the last 7 days.
- 1108) If the beverage preparation machine 1 has not been hot rinsed too recently, then performing a hot rinsing process.
- 1109) If the beverage preparation machine 1 has not been hot rinsed too long ago, then checking whether the beverage preparation machine 1 has been descaled recently.
- 1110) If the beverage preparation machine 1 has not been descaled recently, then performing a descaling process.
- 1111) If the beverage preparation machine 1 has been descaled recently, then ending the process 1101.

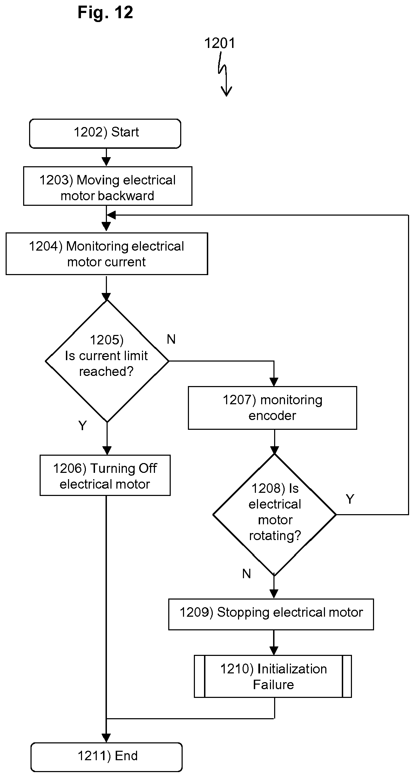

FIG. 12 illustrates a process 1201 for initializing the electrical motor 16 of the beverage preparation machine 1. The process of FIG. 12 may comprise:
- 1202) Starting the process 1201.
- 1203) Moving the electrical motor 16 backwards, hence moving the displaceable element 14 back or downwards.
- 1204) Monitoring the current consumed in the moving electrical motor 16.
- 1205) Checking whether the consumed current has reached a predetermined limit.
- 1206) If the consumed current has reached a predetermined limit, then turning the electrical motor 16 off, then ending the process for initializing the electrical motor 16.
- 1207) If the consumed current has not reached a predetermined limit, monitoring an encoder of the electrical motor 16.
- 1208) Checking whether the encoder indicates that the electrical motor 16 is rotating. If the encoder indicates that the electrical motor 16 is rotating, then looping back to operation 1204.
- 1209) If the encoder indicates that the electrical motor 16 is not rotating, then stopping the electrical motor 16.
   In case the encoder detects a relative position instead of an absolute position, the end position of the electrical motor 16 is detected via the limit set for the consumed current. Once this limit is reached, the relative position m be set to "0". For each turn of the electrical motor 16, the relative position will be incremented by one division. The position "0" is set when the displaceable element 14 is at the lowest position, which corresponds to the largest volume of the chamber 8, for example 260 mL.
- 1210) Performing a process for handling a failure in the initialization of the electrical motor 16.
- 1211) Ending the process 1201.

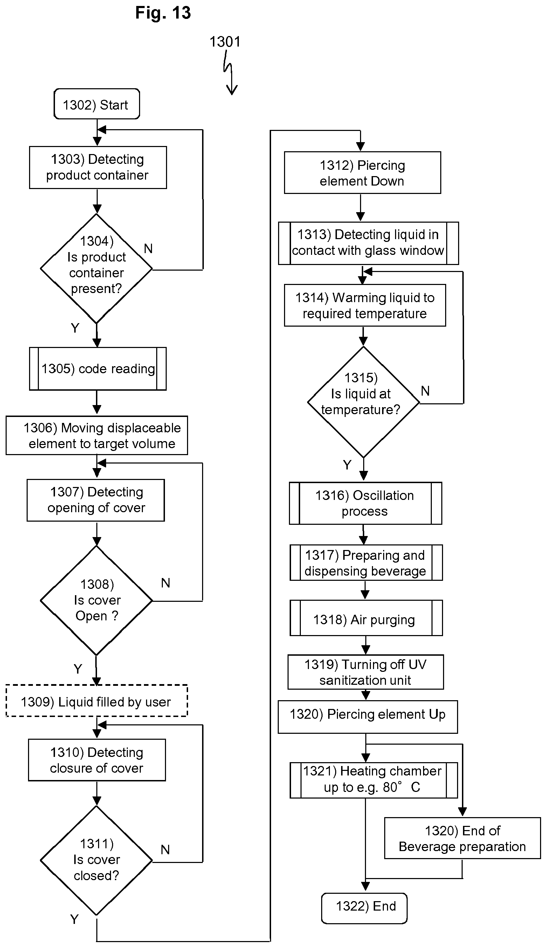

FIG. 13 illustrates a first method 1301 for preparing a beverage with the beverage preparation machine 1. The first method of FIG. 13 may comprise:
- 1302) Starting the first method 1301.
- 1303) Detecting the insertion or approach of a product container 10 in or near the beverage preparation unit 6.
- 1304) Checking whether the product container 10 has been inserted or approached. If the product container 10 has not been inserted or approached, looping back to operation 1303.
- 1305) If the product container 10 has been inserted or approached, reading the code 11 carried by the product container 10.
- 1306) Moving the displaceable element 14 to a position for obtaining the target volume, which is preferably the sum of i) a volume to be dispensed, as encoded in the code 11, to and ii) a safety volume of e.g. 6 mL.
- 1307) Detecting the opening of the cover 20.
- 1308) Checking whether the cover 20 is open. If the cover 20 is not open, then looping back to operation 1307.
- 1309) If the cover 20 is not open, then waiting for the user to fill in the chamber 8 with liquid.
- 1310) Detecting the closing of the cover 20.
- 1311) Checking whether the cover 20 is closed. If the cover 20 is not closed, then looping back to operation 1310.
- 1312) If the cover 20 is closed, then moving down the piercing element 54 so as to pierce the product container 10.
   The movement of the piercing element 54 may herein be controlled by a not shown actuator, like in FIGs. 10.1 to 10.10 but unlike in FIGs. 2 to 9. Thus, the product container 10 may remain closed while the code is read and while the user opens the cover 20 and fills in the required liquid volume.
- 1313) Performing a process for detecting liquid in contact with the protective window 33 of the UV sanitization unit 4.
- 1314) Warming the liquid in the chamber 8 up to the desired temperature, for example a temperature encoded in the code 11.
- 1315) Checking whether the liquid in the chamber 8 is at the desired temperature. If the liquid in the chamber 8 is not at the desired temperature, then looping back to operation 1314.
- 1316) If the liquid in the chamber 8 is at the desired temperature, then performing a process for oscillating the position of the displaceable element 14.
- 1317) Preparing a beverage by the beverage preparation unit 6 and dispensing the beverage in a pot or cup 3.
- 1318) Purging the product container 10 with air pushed by the displaceable element 14.
- 1319) Turning off the UV sanitization unit 4.
- 1320) Moving up the piercing element 54, hence out of the product container 10. The beverage is ready.
- 1321) Heating up the chamber 8, by the heating unit 34, up to e.g. 80°C in order to dry it.
- 1322) Ending the first method 1301.

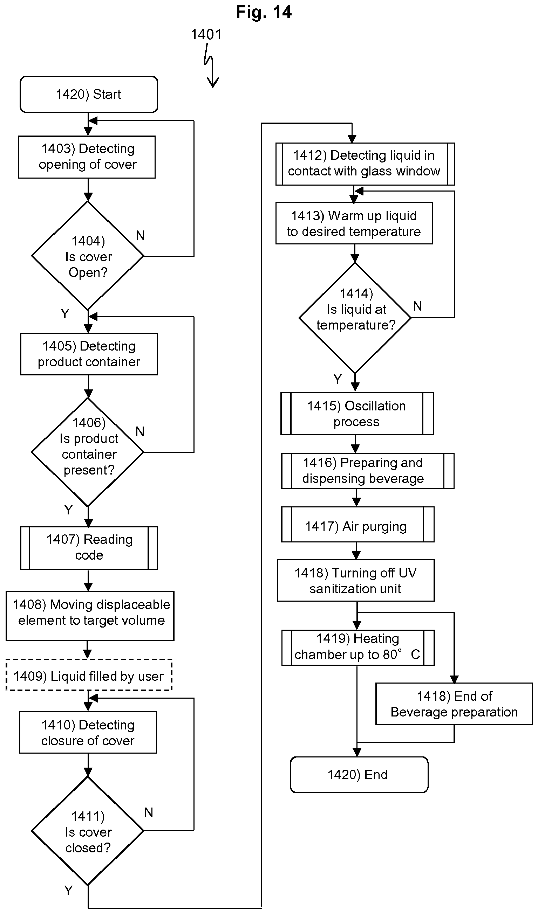

FIG. 14 illustrates a second method 1401 for preparing a beverage with the beverage preparation machine 1. The second method of FIG. 14 may comprise:
- 1402) Starting the second method 1401.
- 1403) Detecting the opening of the cover 20.
- 1404) Checking whether the cover 20 is open. If the cover 20 is not open, then looping back to operation 1307.
   If the cover 20 is not open, then waiting for the user to fill in the chamber 8 with liquid.
- 1405) Detecting the insertion or approach of a product container 10 in or near the beverage preparation unit 6.
- 1406) Checking whether the product container 10 has been inserted or approached. If the product container 10 has not been inserted or approached, looping back to operation 1403.
- 1407) If the product container 10 has been inserted or approached, then reading the code 11 carried by the product container 10.
- 1408) Moving the displaceable element 14 to a position for obtaining the target volume, which is preferably the sum of i) a volume to be dispensed, as encoded in the code 11, to and ii) a safety volume of e.g. 6 mL.
- 1409) The user shall fill liquid in the chamber 8 in order to reach the target volume.
- 1410) Detecting the closing of the cover 20.
- 1411) Checking whether the cover 20 is closed. If the cover 20 is not closed, then looping back to operation 1310.
   Since the cover 20 moves together with the piercing element 54, the product container 10 is pierced when the cover 20 is closed, unlike in the first method 1301 of FIG. 13.
- 1412) Performing a process for detecting liquid in contact with the glass window 33 of the UV sanitization unit 4.
- 1413) Warming the liquid in the chamber 8 up to the desired temperature, for example a temperature encoded in the code 11.
- 1414) Checking whether the liquid in the chamber 8 is at the desired temperature. If the liquid in the chamber 8 is not at the desired temperature, then looping back to operation 1413.
- 1415) If the liquid in the chamber 8 is at the desired temperature, then performing a process for oscillating the position of the displaceable element 14.
- 1416) Preparing a beverage by the beverage preparation unit 6 and dispensing the beverage in a pot or cup 3.
- 1417) Purging the product container 10 with air pushed by the displaceable element 14.
- 1418) Turning off the UV sanitization unit 4. The beverage is ready.
- 1419) Heating up the chamber 8, by the heating unit 34, up to e.g. 80°C in order to disinfect and dry it.
- 1420) Ending the first method 1401.

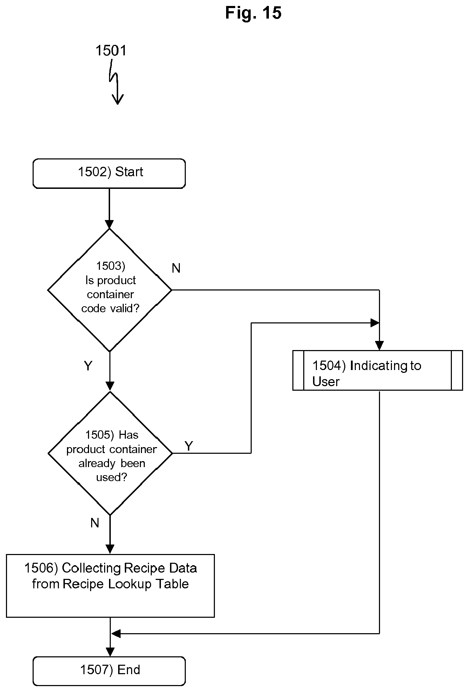

FIG. 15 illustrates a process 1501 for reading a code, which may be carried by the product container. The process of FIG. 15 may comprise:
- 1502) Starting the process 1501.
- 1503) Checking whether the code carried by the product container 10 is a valid code.
- If the code carried by the product container 10 is not a valid code, then performing a process 1504 for indicating it to the user, then ending the process 1501.
- 1505) If the code carried by the product container 10 is a valid code, then checking whether the product container 10 has already been used, i.e. the code already been read.
- If the product container 10 has already been used, then performing the process 1504 for indicating it to the user, then ending the process 1501.
- 1506) If the product container 10 has not already been used, then collecting, from a lookup table stored for example in the beverage preparation machine 1, recipe data corresponding to the read code.
- 1507) Ending the process 1501.

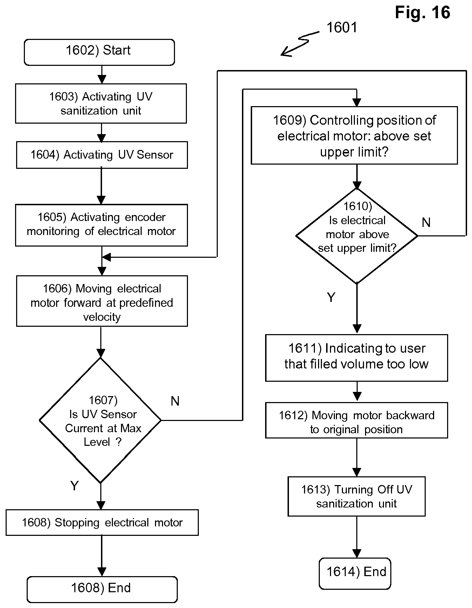

FIG. 16 illustrates a process 1601 for detecting the level of liquid in the chamber 8. The process of FIG. 16 may comprise:
- 1602) Starting the process 1601.
- 1603) Activating the UV sanitization unit 4, hence the UV LEDs.
- 1604) Activating the UV sensor 30.
- 1605) Activating the encoder so as monitor the position of the electrical motor 16.
- 1606) Moving the electrical motor 16 forward, hence the displaceable element 14 upwards, at a predefined velocity.
- 1607) Checking whether the UV sensor 30 is delivering its maximal current, which would indicate that the liquid is in contact with the protective window 33.
- 1608) If the UV sensor 30 is delivering its maximal current, then stopping the electrical motor 16 and ending the process 1601.
- 1609) If the UV sensor 30 is not delivering its maximal current, then controlling the position of the electrical motor 16 to check whether it is above a set upper limit.
- 1610) If the position of the electrical motor 16 is not above the set upper limit, then looping back to operation 1606.
- 1611) If the position of the electrical motor 16 is above the set upper limit, then indicating to the user that the liquid volume in the chamber 8 is too low.
- 1612) Moving the electrical motor 16 backward, thus moving the displaceable element 14 back to the initial position corresponding to the target volume. The user shall then add some liquid in the chamber 8 in order to reach the target volume.
- 1613) Turning Off the UV sanitization unit 4, hence the UV LEDs.
- 1614) Ending the process 1601.

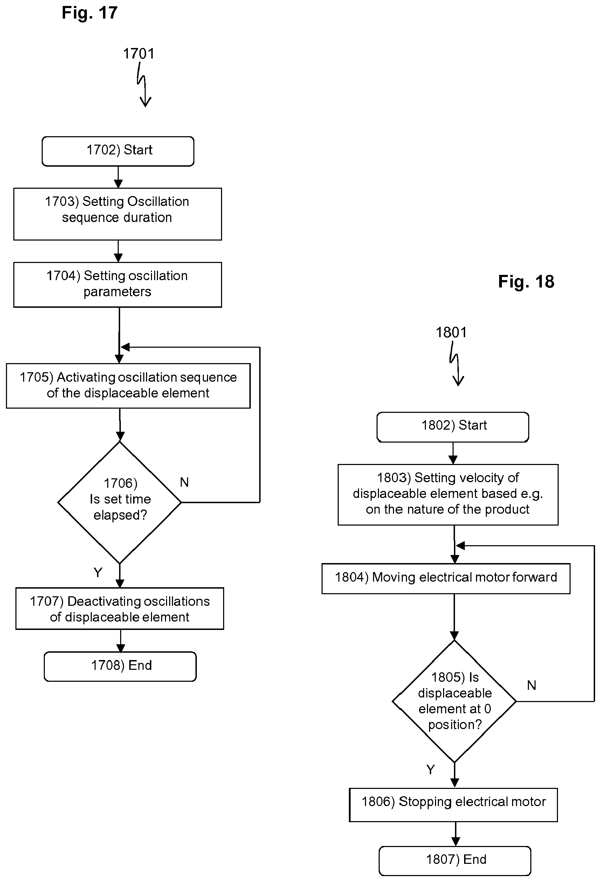

FIG. 17 illustrates a process 1701 for oscillating the selectively varying volume of the chamber 8. The process of FIG. 17 may comprise:
- 1702) Starting the process 1701.
- 1703) Setting a duration for an oscillation sequence.
- 1704) Setting parameters for the oscillation sequence, the parameters depending for example on the liquid volume to be dispensed.
- 1705) Activating an oscillation sequence of the displaceable element 14.
- 1706) Checking whether the set duration has elapsed.

If the set duration has not elapsed, then looping back to operation 1705.
- 1707) If the set duration has elapsed, then deactivating the oscillations of the displaceable element 14.
- 1708) Ending the process 1701.

FIG. 18 illustrates a transferring process 1801 for transferring sanitized liquid to the beverage preparation unit. The process of FIG. 18 may comprise:
- 1802) Starting the process 1801.
- 1803) Setting velocity of the displaceable element 14 based e.g. on the nature of the product contained in the product container 10.
- 1804) Moving the electrical motor 16 forward, hence the displaceable element 14 upwards. During this operation, the liquid is pushed or transferred to the beverage preparation unit 6.
- 1805) Checking whether the displaceable element 14 has reached the position "0", i.e. the highest position in the chamber 8.
   If the displaceable element 14 has not reached the position "0", then looping back to operation 1804.
- 1806) If the displaceable element 14 has reached the position "0", then stopping the electrical motor 16.
- 1807) Ending the process 1801.

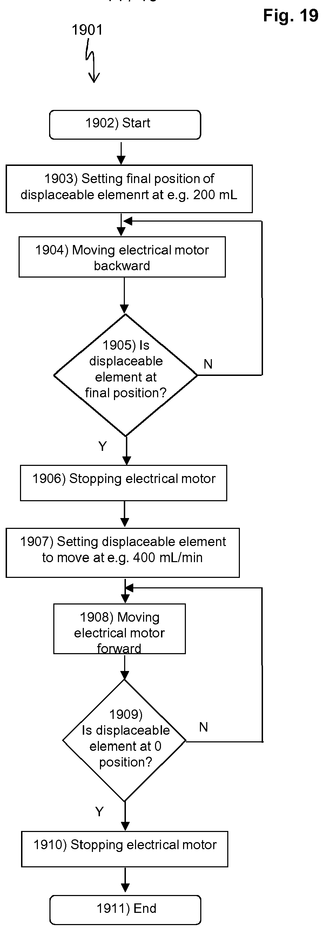

FIG. 19 illustrates a drainage process 1901 for draining the beverage preparation machine 1. The process of FIG. 19 may comprise:
- 1902) Starting the process 1901.
- 1903) Setting a final position to be reached by the displaceable element 14 based e.g. on the read code.
- 1904) Moving the electrical motor 16 backward, hence the displaceable element 14 downwards.
- 1905) Checking whether the displaceable element 14 has reached the final position set in operation 1903.
   If the displaceable element 14 has not reached the final position, then looping back to operation 1904.
- 1906) If the displaceable element 14 has reached the final position, then stopping the electrical motor 16.
- 1907) Setting a velocity of the displaceable element 14, e.g. to 400 mL/min.
- 1908) Moving the electrical motor 16 forward, hence the displaceable element 14 upwards. During this operation, the liquid is transferred to the beverage preparation unit 6.
- 1909) Checking whether the displaceable element 14 has reached the "0" position. If the displaceable element 14 has not reached the "0" position, then looping back to operation 1908.
- 1910) If the displaceable element 14 has reached the "0" position, then stopping the electrical motor 16.
- 1911) Ending the process 1901.

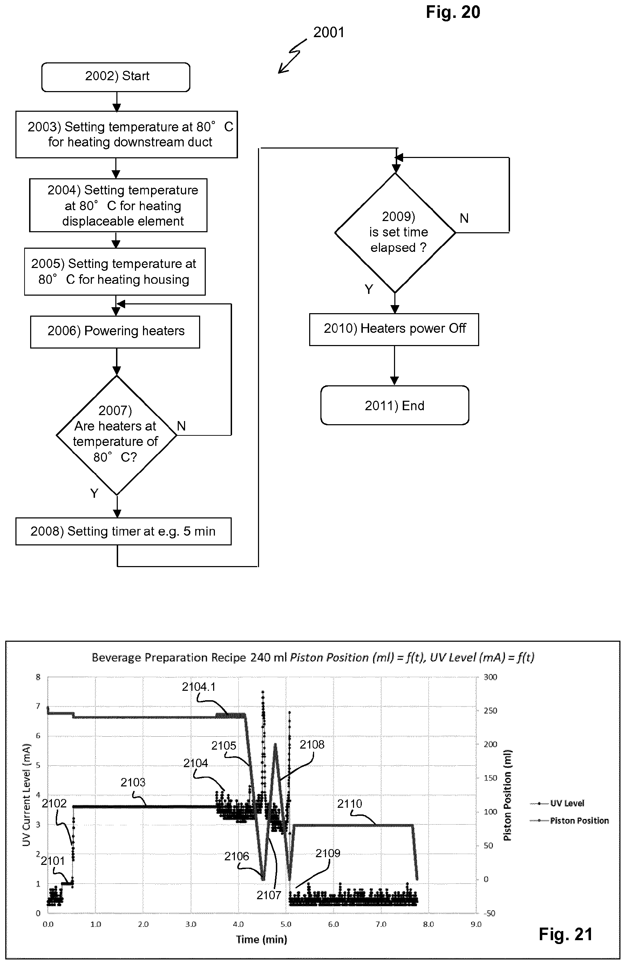

FIG. 20 illustrates a drying process 2001 for drying at least the chamber 8. The process of FIG. 20 may comprise:
- 2002) Starting the process 2001.
- 2003) Setting a temperature at e.g. 80°C for heating the connection line 44 by the heating cartridge 42.
- 2004) Setting a temperature at e.g. 80°C for heating the displaceable element 14 by the flat film 40.
- 2005) Setting a temperature at e.g. 80°C for heating the housing 12 by the rolled film 36.
- 2006) Powering the heating devices, i.e. heating cartridge 42, flat film 40 and rolled film 36.
- 2007) Checking whether the heating devices are at the set temperatures of e.g. 80°C.
- 2008) If the heating devices are not at the set temperatures of e.g. 80°Claim, then looping back to operation 2006.
- 2009) If the heating devices are at the set temperatures of e.g. 80°Claim, then setting a timer at e.g. 5 min.
- 2010) Checking whether the set time has elapsed. If not waiting, until the set time elapses.
- 2011) If the set time has elapsed, then turning Off the heating devices.
- 2012) Ending the process 2001.

FIG. 21 illustrates the evolution, as a function of Time in minutes plotted along the horizontal axis, of:
i) a position of the displaceable element 14, herein a piston, in the chamber 8; this curve is plotted on a scale of -50 to 300 mL along a vertical axis termed "Piston position (ml)", and
ii) the intensity of a current issued by the UV sensor 30; this curve is plotted on a scale of 0 to 8 mA along a vertical axis termed "UV Current Level (mA)".

The curves of FIG. 21 show some operations of the first method 1301 of FIG. 13 or of the second method 1401 of FIG. 14, as follows:
- At an initial stage (t=0): The cover 20 is closed and the UV LEDs are Off. The piston position is at 246 mL, which corresponds to the sum of i) a required volume of 240 mL as read from the code 11 and ii) a safety volume of 6 mL. So the piston has moved downwards to the target volume of 246 mL, in order for the user to fill in the appropriate liquid volume, i.e. up to a visual mark made in the chamber 8.
- Stage 2101: The UV LEDs are powered ON and the current in the UV sensor 30 rises up to 1 mA.
- Stage 2102: The piston is moved upwards while the current in the UV sensor 30 rises up to a maximum of 3.6 mA. When the current in the UV sensor 30 is stable with respect to the piston displacement, the electrical motor 16, hence the piston, is stopped.
- Stage 2103: The current in the UV sensor 30 remains constant during the operation of warming up the liquid in the chamber 8.
- Stage 2104: The process 1701 for oscillating the piston starts in order to homogenize the temperature of the liquid in the chamber 8 and the exposure of the liquid to UV light. The oscillations of the piston, which are visible at 2104.1 cause instability in the current in the UV sensor 30.
- Stage 2105: The piston is moving upwards at a flow rate of about 450 mL/min up to the "0" position (0 mL).
- Stage 2106: The piston has reached the "0" position. The reflection of the UV light on the piston increases the current in the UV sensor 30 to a maximum of about 7,5 mA.
- Stage 2107: The piston is moving downwards to pump about 200 mL of ambient air through the first non-return valve 23.
- Stage 2108: The piston is moving upwards to evacuate ambient air and the remaining liquid trapped in the chamber 8 through the beverage preparation unit 6, hence via the connection line 44, the product container 10 and the pot or cup 3. Thus, the product container 10 is completely empty.
- Stage 2109: The UV LEDs are switched off and the piston is moving downwards to 80 mL in order to prepare the chamber 8 for the drying process as e.g. in FIG. 21 (at about 80°C). The beverage preparation recipe being then finalized for the user by providing an indication on a user interface.
- Stage 2110: The piston remains at the same position during the heating process temperature disinfection and then is moved upward to 0 ml to facilitate the cooling of the syringe body.

The present invention has been described in conjunction with various embodiments and implementations as examples. However, other variations can be understood and effected by those persons skilled in the art and practicing the claimed invention, from the studies of the drawings, this disclosure and the independent claims. In the claims as well as in the description the word "comprising" does not exclude other elements or steps and the indefinite article "a" or "an" does not exclude a plurality. A single element or other unit may fulfill the functions of several entities or items recited in the claims.

## Claims

1. Beverage preparation machine (1) comprising:
- a liquid tank (2) defining a chamber (8) for receiving a liquid, wherein the chamber (8) has a selectively variable volume,
- a UV sanitization unit (4) configured and positioned to emit UV light into the chamber (8) so as to sanitize the liquid received in the chamber (8), and
- a beverage preparation unit (6) fluidly connected to the chamber (8), so as to receive the sanitized liquid for beverage preparation.

2. Beverage preparation machine (1) according to claim 1, wherein the liquid tank (2) comprises i) a housing (12) and ii) a displaceable element (14), for example a piston, the displaceable element (14) being arranged inside the housing (12), preferably at a bottom part of the housing (12), so as to delimit the chamber (8),
the displaceable element (14) being configured to be displaced relative to the housing (12), preferably in a vertical direction (Z), so as to vary the volume of the chamber (8).

3. Beverage preparation machine (1) according to any one of the preceding claims, wherein the liquid tank (2) comprises a cover (20) configured for selectively closing and opening the chamber (8), the cover (20) being preferably located atop the chamber (8) when closing the chamber (8),
the beverage preparation machine (1) preferably further comprising a linkage mechanism (46) arranged to link the cover (20) to a fixed body of the beverage preparation machine (1) or to the housing (12), the linkage mechanism (46) being configured to guide the movements of the cover (20) when selectively opening and closing the chamber (8).

4. Beverage preparation machine (1) according to any one of the preceding claims, wherein the UV sanitization unit (4) is included in or integrally provided with the liquid tank (2), preferably in the displaceable element (14) and/or in the housing (12) and/or in the cover (20).

5. Beverage preparation machine (1) according to any one of the preceding claims, wherein the UV sanitization unit (4) comprises a UV sensor (30), the UV sensor (30) being arranged to detect the level of the liquid in the chamber (8).

6. Beverage preparation machine (1) according to any one of the preceding claims, further comprising a connection section, the connection section preferably comprising a piercing element (54) and/or a connection line (44), for fluidly connecting and disconnecting the chamber (8) to and from the beverage preparation unit (6), wherein the connection section or at least its connection line (44) is preferably integrally provided with the cover (20) for selectively fluidly connecting and disconnecting the chamber (8) to and from the beverage preparation unit (6).

7. Beverage preparation machine (1) according to any one of the preceding claims, further comprising:
i) a first non-return valve (23) configured to let air flow in, but not out of, the chamber (8), the first non-return valve (23) being preferably arranged in the cover (20), and/or
ii) a second non-return valve (56) configured to let fluid flow out of, but not into, the chamber (8), the second non-return valve (56) being preferably arranged in the beverage preparation unit (6) or in the connection section.

8. Beverage preparation machine (1) according to any one of the preceding claims, further comprising a heating unit (34) configured to transfer heat to the chamber (8), in particular for warming up the liquid, the heating unit (34) being preferably arranged to transfer heat to at least one wall delimiting the chamber (8), preferably to a lateral wall extending between the bottom of the chamber (8) and the top of the chamber (8),
the heating unit (34) being preferably configured to also transfer heat to at least part of the connection section or the connection line (44).

9. Method for preparing a beverage with a beverage preparation machine (1) according to any one of the preceding claims, the method comprising:
- selectively varying the volume of the chamber (8) so as to reach a target volume,
- filling the chamber (8) with a liquid,
- emitting UV light, by the UV sanitization unit (4), into the chamber (8) so as to sanitize the liquid received in the chamber (8),
- transferring some or all of the sanitized liquid to a beverage preparation unit (6), and
- preparing a beverage with the transferred liquid.

10. Method according to claim 9, wherein the target volume is set to be the sum of
i) a volume to be dispensed to prepare the beverage and ii) a safety volume, preferably smaller than 10 mL, more preferably of about 5 to 6 mL.

11. Method according to any one of claims 9 to 10, further comprising: after filling the chamber (8) with the liquid, selectively decreasing the volume of the chamber (8) so as to evacuate some or all gas out of the chamber (8), preferably via the beverage preparation unit and/or the second non-return valve.

12. Method according to any one of claims 9 to 11, further comprising: at least partially during the emission of UV light, successively decreasing and increasing the volume of the chamber (8) in an oscillating manner so as to set the liquid in motion within the chamber (8).

13. Method according to any one of claims 9 to 12, the method further comprising:
- after filling the chamber (8) with the liquid, warming up by the heating unit (34) the liquid in the chamber (8), and
- preferably, performing the emission of UV light at least partially during the warming-up of the liquid.

14. Method according to any one of claims 9 to 13, further comprising:
- after transferring the sanitized liquid to the beverage preparation unit (6), letting air enter the chamber (8), preferably via the first non-return valve,
- heating up, preferably by the heating unit (34), the liquid tank (2) and/or the entered air and, preferably, the connection line (44), and
- reducing the selectively variable volume of the chamber (8) so as to evacuate the entered air,
wherein, preferably after the heating up operation, at least part of components of the beverage preparation machine (1) heated up, preferably by the heating unit (34), are actively cooled.

15. Method according to any one of claims 9 to 14, further comprising reading a code and setting the target volume as a function of the code, the code being preferably carried by a product container placed in or near the beverage preparation unit (6).
